# EUROPEAN PATENT SPECIFICATION

(11) **EP 1 985 491 B1**
(45) Date of publication and mention of the grant of the patent: **28.07.2010**
(21) Application number: 08380083.9
(22) Date of filing: 13.03.2008
(51) Int. Cl.: B60N 2/28

(54) **Collision safety device being applicable to infant seats**
Aufprallsicherheitsvorrichtung, anwendbar für Kindersitze
Dispositif de sécurité contre les collisions à utiliser sur des sièges bébé

(30) Priority: 23.04.2007 ES 200700827 U
(43) Date of publication of application: 29.10.2008
(73) Proprietor: JANE, S.A., 08184 Palau Solita I Plegamans Barcelona (ES)
(72) Inventor: Santamaria, Manuel Jane, c/o Mercaders, 08184 Palau Solita i Plegamans (Barcelona) (ES)
(74) Representative: Pastells Teixido, Manuel

(56) References cited:
- EP-A- 0 928 718
- EP-A- 0 937 484
- US-A- 4 991 230

## Description

### OBJECT OF THE INVENTION

Collision safety device being applicable to infant seats.

### BACKGROUND OF THE INVENTION

There exist several types of seats being designed for children and for their safety being generally installed on the back seats of motorcars, said seats comprising a backrest being provided with a headrest, said backrest and headrest each having respective complementary side members.

Patent EP-0931694 A2 relates to an infant seat being applicable to motorcars and comprising at each of the sides of the backrest a respective protection for the child's head, said protections being each made up by a flexible air chamber being such as to bring about an outflow of the air in case of a collision.

There is also European Patent EP 0 928 718 A2 for a child's safety seat applicable to cars which has a shock absorbing structure which includes small air pockets fitted with two release openings and which shows all features of the preamble of claim 1.

Also cited as an antecedant is a protective garment to absorb shocks (US 4 991 230 A). This comprises several pockets filled with foam material which have rigid tubular openings to release the air.

### SUMMARY OF THE INVENTION

This invention has as its object a safety device being applicable to this type of seats and such as to protect the child, i.e. mainly its head and sides, in case of a collision.

This device is made up by a chamber of flexible walls being filled with air and comprising a nipple being such as to facilitate the progressive outflow of the air when the chamber is highly pressed, the nipple having valve means being such as to prevent the accidental outflow under low pressures of the air occupying the chamber and to give way when this latter is subjected to a high pressure thereby facilitating the progressive outflow of the air.

The chamber will be subdivided into several departments so as to be in a position to control different pressures depending on the force of the collision, and the chamber and the valve means will be arranged in the inside of the complementary side members of the backrest of the infant seat and of those of the headrest of said backrest.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:

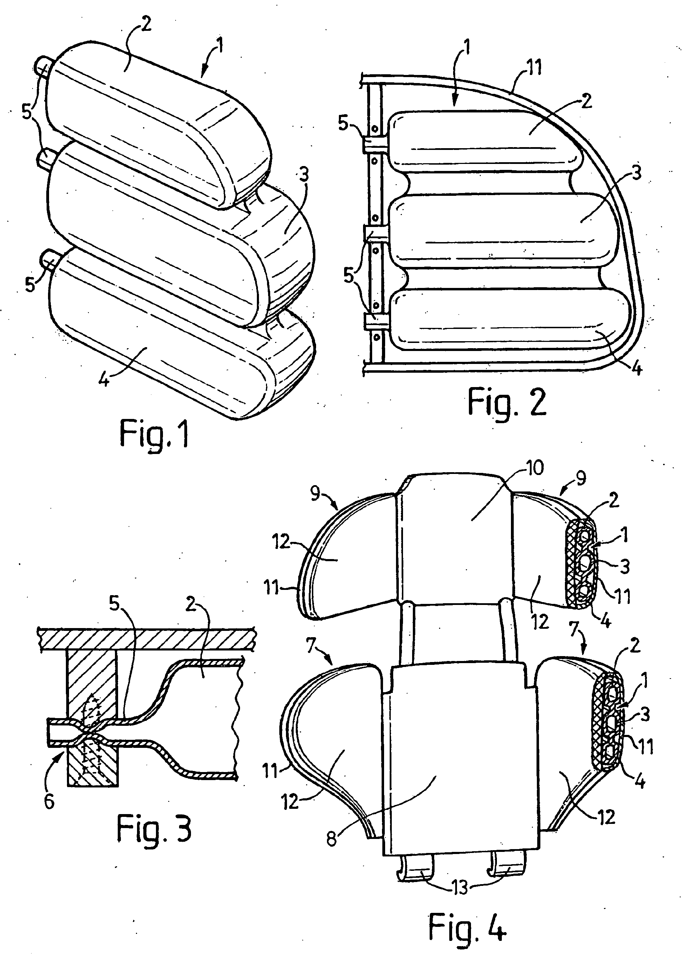

Fig. 1 illustrates in a perspective view the chamber making up the device being the object of the invention;
Fig. 2 shows in an elevational view the arrangement of said chamber in one of the complementary side members of the headrest of the backrest;
Fig. 3 shows in a diagrammatic longitudinal section one example of the valve means acting on the nipple of the chamber; and
Fig. 4 depicts in a front elevation a backrest being provided with the safety device.

### DETAILED DESCRIPTION

According to the drawings the safety device being the object of the invention is made up by a chamber (1) of plastics material with flexible walls and filled with air, said chamber preferentially being subdivided into several separate departments (2, 3 and 4) each having a nipple (5) comprising valve means (6) being such as to prevent the accidental outflow of the air under low pressures and to facilitate its progressive outflow when the departments (2, 3 and4) are highly pressed.

The chamber (1) and the valve means (6) are arranged in the inside of the complementary side members (7) of the backrest (8) of the seat and of the complementary side members (9) of the headrest (10) of said backrest, in the empty space being formed between the rigid outer shell (11) and the deformable front plate (12) being generally made of "porex", these latter shell and plate making up said complementary side members.

Numeral (13) denotes the connecting links for removably and articulately fitting the backrest (8) to the seat (not shown).

In the case of a hard collision the head and sides of the child will press the air chambers (1) being installed in the complementary side members (9) and (7) of the backrest and its headrest through the deformation of the plates (12) and will thus facilitate the progressive outflow of the air of the departments (2, 3 and 4) thus deadening the effects of the collision.

## Claims

1. Collision safety device being applicable to infant seats and made up by a chamber (1) of flexible walls being filled with air and being subdivided into several departments (2, 3 and 4) each of them having a nipple (5) being such as to facilitate the progressive outflow of the air when the chamber (1) is highly pressed, **characterised in that** said nipple (5) have valve means (6) being such as to prevent the accidental outflow under low pressures of the air occupying the chamber (1) and to give way when receiving a high pressure thereby facilitating the outflow of the air, the chamber (1) and the valve means (6) being arranged in the inside of the complementary side members (7) of the backrest (8) of the infant seat and in the complementary side members (9) of the headrest (10) of said backrest.

2. Collision safety device being applicable to infant seats, according to claim 1, **characterised in that** the chamber (1) is installed in the empty space being formed between the rigid back shell (11) and the deformable front plate (12), these latter shell and plate making up said complementary side members (7 and 9).

## Patentansprüche

1. Kollisionsschutzeinrichtung für Kindersitze, bestehend aus einer Kammer (1) mit flexiblen luftgefüllten Wänden, die in mehrere Abschnitte (2, 3 und 4) unterteilt sind, von denen jeder einen Nippel (5) aufweist, um das progressive Ausströmen der Luft zu erleichtern, wenn die Kammer (1) einer hohen Druckbelastung ausgesetzt wird, **dadurch gekennzeichnet, dass** der Nippel (5) mit Ventilmitteln (6) versehen ist, die so ausgebildet sind, dass das versehentliche Ausströmen der in der Kammer (1) befindlichen Luft bei geringer Druckbelastung verhindert und das Ausströmen der Luft unter hoher Druckbelastung erleichtert wird, wobei die Kammer (1) und die Ventilmittel (6) im Inneren der ergänzenden Seitenteile (7) der Rückenlehne (8) des Kindersitzes und in den ergänzenden Seitenteilen (9) der Kopfstütze (10) der Rückenlehne angeordnet sind.

2. Kollisionsschutzeinrichtung für Kindersitze nach Anspruch 1, **dadurch gekennzeichnet, dass** die Kammer (1) in dem Leerraum zwischen der starren Rückenschale (11) und der verformbaren Frontplatte (12) eingerichtet ist, wobei diese letztgenannte Schale und Frontplatte die ergänzenden Seitenteile (7 und 9) bilden.

## Revendications

1. Dispositif de sécurité contre les chocs applicable à des sièges pour enfant et composé d'une chambre (1) aux parois flexibles remplies d'air et sous-divisées en plusieurs compartiments (2, 3 et 4) chacun ayant un mamelon (5) destiné à faciliter la sortie de l'air quand la chambre (1) est hautement comprimée, **caractérisé en ce que** ce mamelon (5) présente une valve (6) servant à empêcher la sortie accidentelle, à de faibles pressions, de l'air contenu dans la chambre (1) et à le laisser s'échapper en recevant une forte pression, ce qui facilite la sortie de l'air, la chambre (1) et la valve (6) étant disposées à l'intérieur des éléments latéraux complémentaires (7) du dossier (8) du siège pour enfant et dans les éléments latéraux complémentaires (9) de l'appui-tête (10) de ce dossier.

2. Dispositif de sécurité contre les chocs applicable à des sièges pour enfant, conformément à la revendication 1, **caractérisé en ce que** la chambre (1) est installée dans l'espace vide formé entre la carcasse arrière rigide (11) et la plaque frontale déformable (12), cette carcasse et cette plaque composant lesdits éléments latéraux complémentaires (7 et 9).
